# EUROPEAN PATENT SPECIFICATION

(11) **EP 2 827 344 B1**
(45) Date of publication and mention of the grant of the patent: **18.11.2015**
(21) Application number: 14177233.5
(22) Date of filing: 16.07.2014
(51) Int. Cl.: H01B 12/06, H01B 12/16

(54) **Superconductor electric cable and method for the obtainment thereof**
Elektrisches supraleitendes Kabel und Verfahren zur Herstellung davon
Câble électrique supraconducteur et procédé d'obtention de celui-ci

(30) Priority: 16.07.2013 IT MI20131185
(43) Date of publication of application: 21.01.2015
(73) Proprietor: Tratos Cavi S.p.A., 52036 Pieve S. Stefano AR (IT)
(72) Inventor: Bragagni, Albano, 52036 PIEVE S, STEFANO (Arezzo) (IT); Seri, Massimo, 52036 PIEVE S. STEFANO (Arezzo) (IT); Anemona, Alessandro, 00133 ROMA (IT)
(74) Representative: Zanellato, Gianluca

(56) References cited:
- EP-A1- 2 369 600
- GB-A- 2 350 474

## Description

The present invention has as object an electric cable and a method for the obtainment thereof.

In particular, the present invention refers to a superconductor electric cable.

The present invention has application in the manufacturing of high-intensity magnetic field generators, for example reactors for nuclear fusion, particle accelerators or magnetic-levitation train lines.

The present invention may also have application in the transmission of high-energy electrical energy.

Electric cables are known that are made of superconductor materials, in which such materials are made of wires or strips associated with supports of various shapes and coated in order to protect the integrity of the materials themselves.

Superconductor materials are materials that have very low or zero resistivity below a certain temperature, termed critical temperature T_{C}. This allows a practically ideal passage of electric current, without energy dispersions, e.g. in the form of heat.

The following are among the more well-known superconductor materials used: the Niobium-Titanium (Nb-Ti) alloy and the Niobium-Tin (Nb₃Sn) intermetallic compound. These materials are termed *Low Temperature Superconductors* (LTS). They typically have very low critical temperatures, respectively T_{C} = 9 K and T_{C} = 18K.

These materials are available in wires which are intertwined in a known manner in order to create the cable.

The cables made in this manner operate at a very low temperature, equal to 4.2 K, and they must necessarily be cooled through the use of liquid helium.

One of the techniques used most for cooling the cable is termed *Cable In Conduit Conductor* (CICC). This technique dates from the 1970s and consists of intertwining the wires within a metal duct in which the liquid helium is made to flow.

Over the last few years, superconductors with high critical temperature have been developed, the so-called *High Temperature Superconductors* (HTS).

Materials based on compounds of ReBa₂Cu₃O_{7-δ} type have good characteristics, i.e. compounds based on oxygen (in variable quantity), copper, barium and where "Re" indicates yttrium or any one of the rare earth elements.

The materials have higher critical temperatures, such as T_{C} = 90-94 K.

Often, the latter materials are available in strips, given that it is complicated to obtain them in wire form.

In particular, the strips used are termed *coated conductors* since they are strips with steel core or nickel-based alloy core coated with a thin superconductor film and an external copper layer.

Also in the case of the strips, the cables are obtained by means of the CICC technique, i.e. by providing for a flow duct for the coolant liquid.

For such purpose, seats are provided on a hollow metal support in order to make the coolant flow; the strips, arranged in stacks, are housed in such seats. A metal sheath is wound in order to close the seats.

Examples of known of such electric cables can be seen in document EP 2 369 600 and document GB 2 350 474.

Disadvantageously, in order to sufficiently cool the superconductor, it is necessary to use a considerable quantity of energy to ensure the correct operation temperatures and to ensure the effectiveness of the cable.

In this context, the technical task underlying the present invention is to propose an electric cable and abovementioned drawback of the prior art.

In particular, object of the present invention is to provide an electric cable and a method for the obtainment thereof that allow a more effective cooling of the superconductor element.

The specified technical task and object are substantially attained by an electric cable and a method for the obtainment thereof comprising the technical characteristics set forth in one or more of the enclosed claims.

Further characteristics and advantages of the present invention will be clearer from the exemplifying and hence non-limiting description of a preferred but not exclusive embodiment of an electric cable and a method for the obtainment thereof, as illustrated in the enclosed drawings in which:

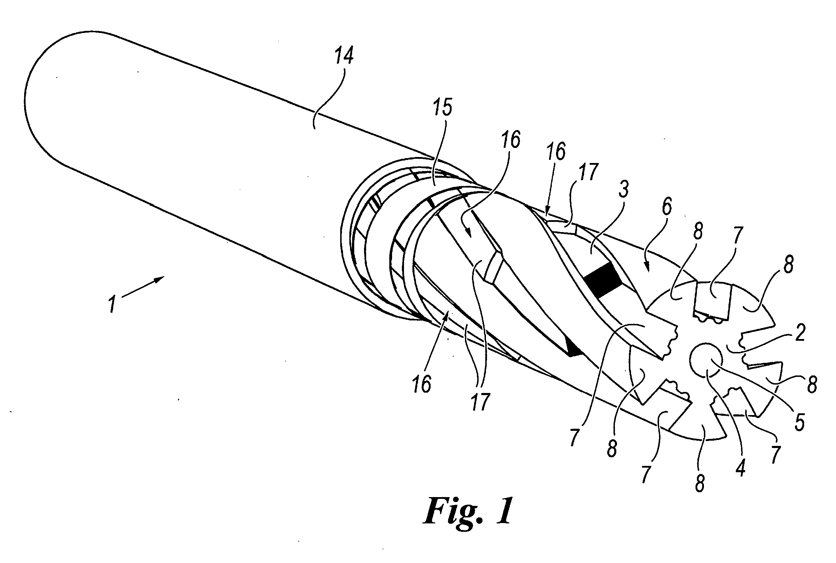

- figure 1 is a perspective view partially in section of a superconductor electric cable in accordance with the present invention;

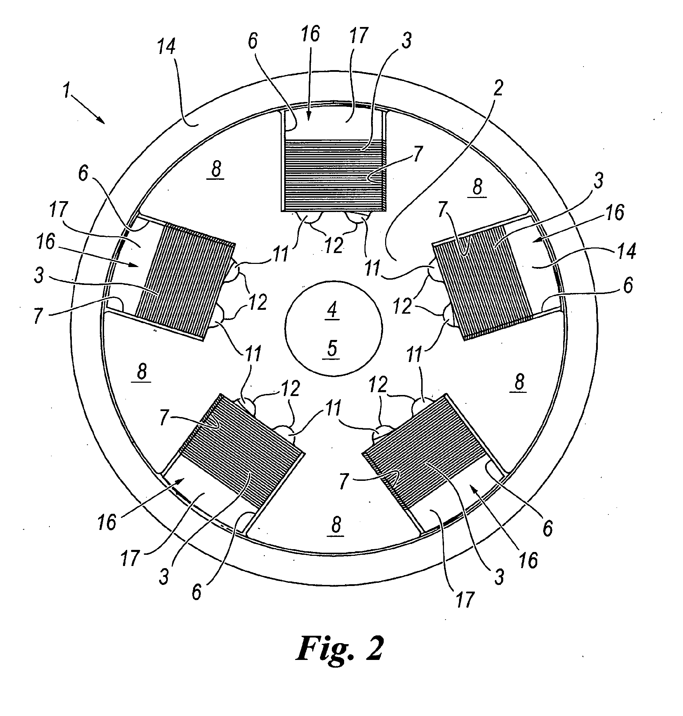

- figure 2 is a plane view in section of the cable of figure 1;
- figure 3 is a detail of the section view of figure 2 in a first embodiment; and
- figure 4 is a detail of the section view of figure 2 in a second embodiment.

With reference to the enclosed figures, reference number 1 indicates overall an electric cable, in particular a superconductor electric cable, in accordance with the present invention.

The cable 1 comprises a support body 2 and a plurality of conductor strips 3 associated with the support body 2.

The support body 2 has elongated form and is made of flexible material in a manner such that it can be wound in coils.

In particular, the support body 2 is made of a metal material.

The support body 2 has, at its interior, a cavity 4 which is extended in accordance with the support body 2 itself and which defines a flow duct 5 for a coolant liquid.

A plurality of guides 6 are fixed to the support body 2 in order to define respective seats 7 for housing the strips 3.

The guides 6 comprise a plurality of walls 8 which are extended away from the support body 2. Each pair of adjacent walls 8 defines a seat 7.

The seats 7 are extended in accordance with the extension of the support body 2 and the entire cable 1. The seats 7, and correspondingly the walls 8, have a substantially rectilinear extension, considering a rectilinear section of cable 1.

Alternatively, the seats 7, and correspondingly the walls 8, have a substantially helical extension. This has particular application in the conduction of alternating current.

Each seat 7 has a base face 9, against which the strips 3 abut, and two lateral faces 10 which are extended starting from the base face 9.

The base face 9 has a cross section oriented orthogonal to a radial direction.

The lateral faces 10 are the two opposite faces of the walls 8.

Preferably, when the guides 6 have rectilinear extension, the lateral faces 10 of each seat 7 are substantially parallel to each other.

Preferably, when the guides 6 have helical extension, the lateral faces 10 of each seat 7 are facing each other and at a constant and uniform distance from each other.

In other words, the seats 7 have substantially square or rectangular form in section.

The strips 3 are superimposed on each other in stacks. The stacks are then placed in the seats 7.

All the strips 3 have the same width. In addition, all the stacks have the same number of strips 3.

The strips 3 are of *coated conductor* type. In other words, each strip 3 comprises a metal core, e.g. made of steel or nickel-based alloys.

The cores are coated with a thin superconductor film. Finally, the strips 3 have an external coating made of copper that covers everything.

Preferably, the superconductor material used is of *High Temperature Superconductor* type. Still more preferably, the material used is of ReBCO type.

In accordance with the present invention, the cable 1 has at least one flow channel 11 in each seat 7 in order to make coolant fluid flow, also within the seats 7 themselves.

In more detail, at least one groove 12 is obtained within each seat 7 in a manner such that the coolant fluid flows herein in direct contact with the strips 3. In particular, two grooves 12 are obtained in each seat 7, preferably on the base face 9. Such grooves 12 are situated side-by-side each other and at a uniform distance from each other.

Alternatively, the grooves 12 can also be obtained on the lateral faces 10.

Each groove 12 follows the extension of the base face 9, and thus follows the extension of the seats 7 themselves.

Each groove 12 has a section transverse to the extension direction of the seat 7 with substantially semicircular form. Advantageously, this shape of the grooves 12 ensures an effective transit of the coolant fluid.

In addition, the edges 12a of the grooves 12 at the base faces 9 of the seats 7 are rounded. Advantageously, this shape of the edges 12a of the grooves 12 prevents the strips 7, pressed in the seats 7 (as will be seen hereinbelow), from being damaged by the edges 12a of the grooves 12.

Preferably in association with that stated above, the width of the strips 3 is smaller than the width of the seats 7. The width of the seats 7 is calculated as the distance between the lateral faces of the seats 7 themselves.

In such a manner, air spaces 13 come to be determined between the stacked strips 3 and each lateral face 10 of every seat 7. The coolant fluid that flows into the flow channels 11 also enters into the air spaces 13, directly reaching all the strips 3 and considerably increasing the cooling thereof.

The cable 1 further comprises a coating 14 placed around the guides 6 in order to close the seats 7. Advantageously, a band 15 is wound directly above the guides 6 and results interposed between the guides 6 and the coating 14.

Preferably, the coating 14 is metallic and is drawn coaxial to the support body 2, as will be better seen hereinbelow. For example the coating is made of steel or aluminum.

Preferably, also the band 15 is metallic.

In accordance with a further aspect of the invention, the cable 1 further comprises compression means active on the strips 7 in order to compress them inside the respective seats 7.

In particular, the compression means comprise a plurality of spacers 16, each placed in a respective seat 7 of strips 3. The spacers 16 compact the stacks of strips 3 in each seat 7. More precisely, the spacers 16 compact the stacks of strips 3 in each seat 7 in cooperation with the coating 14.

Indeed, the spacers 16 are placed below the coating 14, and below the band 15, and are pressed by the coating 14. For such purpose, the spacers 16 are applied in a manner so as to project slightly from the seats 7, in a manner so to be thrust inside the seats 7 during the application of the coating 16.

Advantageously, the use of the spacers 16 that press against the strips 3 allows strongly pressing the strips 3 in the seats 7, preventing them from moving. This prevents, during use, the presence of strong magnetic fields from generating induced forces on the strips 7 themselves, which would move the strips and generate friction. The elimination of such friction induced by the magnetic fields allows preventing local overheating, which can interrupt the operation of the superconductor materials used in the strips 7, and allows preventing local wear that can mechanically compromise the strips 7.

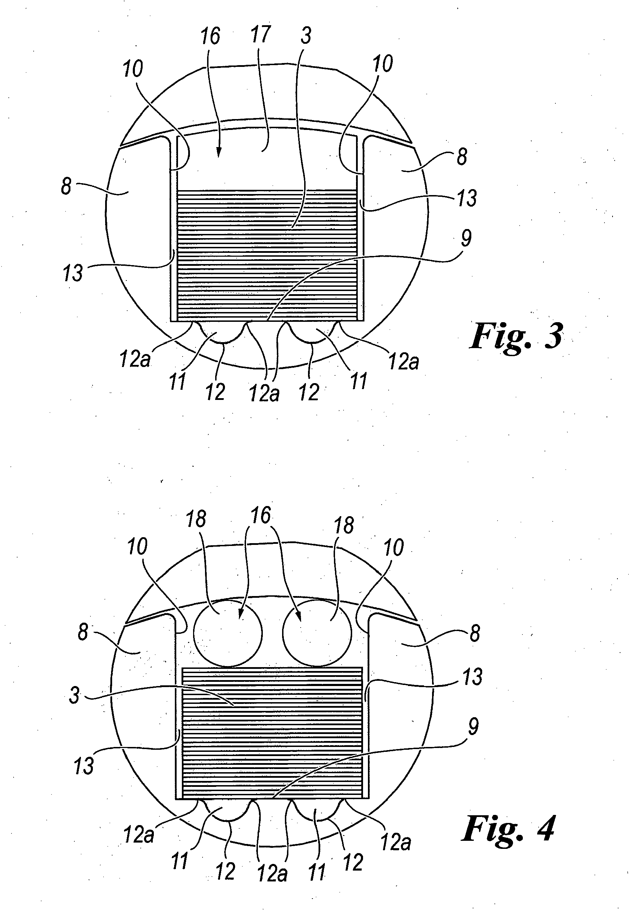

Each spacer 16 can be a single strip-like body 17 (figure 3), preferably metallic, having a width substantially equal to the width of the seats 7. Alternatively, each spacer 16 can comprise a plurality of metal wires 18 (figure 4) having substantially circular section and fit next to each other in the seats 7 above the strips 3.

The invention further attains a method for obtaining the above-described cable 1.

The method begins with the arranging of the support body 2.

This is achieved by means of hot extrusion, preferably of metal material.

In particular, the support body 2 production process provides for a cooling step downstream of the extrusion in order to ensure the size characteristics.

Together with the support body 2, the walls 8 are also extruded in the same process, such walls 8 defining the seats 7 of the guides 6.

If the guides 6 have a helical extension, following extrusion, the support body 2 and the guides 6 are subjected to twisting with constant pitch.

At this point, the strips 3 are placed in the seats 7. For such purpose, the strips 3 are unwound at constant tension from suitable coils and are superimposed on each other in order to form the abovementioned stacks. The stacks of strips 3 are then inserted in the seats 7, preferably at the same time as the stacking step. The insertion occurs by means of insertion heads (not illustrated) that push the stacks into the seats 7.

If the extension of the seats 7 is helical, the insertion heads are rotated by means of a rotating cage synchronized with the pitch of the guides 6 in a manner so as to follow the progression of the seats 7 themselves.

Subsequently, the metal band 15 is wound around the guides 6.

Finally, the coating 14 is applied by means of a drawing process. In such a manner, the seats 7 are hermetically closed. In detail, the application of the coating 14 occurs by wrapping the guides 6 with a metal tube that is then drawn in order to make it reach the correct diameter and perfectly adhere to the guides 6.

The tube is wound by arranging a metal sheet and wrapping it around the guides 6. The sheet is longitudinally welded in order to obtain the tube by means of TIG or laser process.

In accordance with the main aspect of the invention, the method comprises the step of arranging the flow channel 11 (or channels) for the coolant fluid in each seat 7.

Such step is achieved by arranging at least one of the grooves 12 in the seat 7. In detail, the grooves 12 are obtained directly during the step of extruding the support body 2 and the guides 6.

Clearly, given that the grooves 12 are obtained during the extrusion of the support body 2 and the guides 6, they are made along the extension of the guides 6 and the seats 7 themselves.

In accordance with the secondary aspect of the invention, the method further comprises the step of inserting the plurality of spacers 16 in the seats 7. Both when the spacers 16 are strip-like bodies 17, and when they are groups of adjacent wires, the introduction of the spacers 16 is achieved in an entirely analogous manner to the insertion of the strips 3.

Such step is attained before the step in which the guides 6 are wrapped by the band 15 and before the application of the coating 14. In such a manner, the latter steps contribute to achieving the necessary compression of the strips 3 in the seats 7.

The invention attains the proposed object.

Indeed, the presence of flow channels for the coolant fluid in the seats allows, as said, a direct and more effective cooling of the superconductor strips, with a reduction of the energy necessary for maintaining the superconductor material under the critical temperature.

## Claims

1. Electric cable comprising:
- a support body (2) with elongated form having a cavity (4) at its interior defining a flow duct (5) for a coolant fluid;
- a plurality of strips (3) at least partly made of superconductor material, associated with said support body (2);
- a plurality of guides (6) fixed to said support body (2) defining respective seats (7) for housing the strips (3);
**characterized in that** it has a flow channel (11) for the coolant fluid in each seat (7).

2. Cable according to claim 1, **characterized in that** each seat (7) has at least one groove (12) being extended in accordance with the extension of the seat (7) and defining said flow channel (11).

3. Cable according to claim 2, **characterized in that** each seat (7) has two grooves (12) side-by-side each other and being extended in accordance with the extension of the seat (7) and defining respective flow channels (11).

4. Cable according to claim 2 or 3, **characterized in that** each seat (7) has a base face (9) on which the strips (3) lie in abutment and two lateral faces (10) connected to the base face (9); each groove (12) being obtained on said base face (9).

5. Cable according to claim 3 or 4, **characterized in that** each groove (12) has a cross section with substantially semicircular form.

6. Cable according to any one of the claims from 3 to 5, **characterized in that** each groove (12) has rounded lateral edges (12a) in proximity to the base face (9).

7. Cable according to any one of the claims from 4 to 6, **characterized in that** said strips (3) have a width smaller than the width of the seats (7) in a manner so as to define an air space (13) between said strips and said lateral faces (10) of the seats (7).

8. Cable according to any one of the preceding claims, **characterized in that** it comprises a plurality of spacers (16), each inserted in a respective seat (7) above said strips (3) in order to compact said strips (3) in said seats (7).

9. Cable according to claim 8, **characterized in that** it comprises a coating (14) placed around said guides (6) and which closes said seats (7); said spacers (16) being placed between said strips (3) and said coating (14).

10. Cable according to claim 8 or 9, **characterized in that** each spacer (16) comprises a strip-like body (17) having width substantially equal to the width of the seats (7).

11. Cable according to claim 8 or 9, **characterized in that** each spacer (16) comprises a plurality of wires (18) arranged side-by-side each other in each seat (7) in abutment against the strips (3).

12. Method for obtaining an electric cable in accordance with any one of the preceding claims, comprising the steps of:
- arranging a support body (2) with elongated form having a cavity (4) at its interior defining a flow duct (5);
- arranging a plurality of guides (6) fixed to said support body (2), defining respective seats (7);
- placing a plurality of strips (3), at least partly made of superconductor material, in said seats (7);
**characterized in that** it further comprises the step of arranging at least one flow channel (11) for the coolant fluid in each seat (7).

13. Method according to claim 12, **characterized in that** the step of arranging at least one flow channel (11) comprises the step of obtaining at least one groove (12) within each seat (7).

## Patentansprüche

1. Elektrisches Kabel umfassend:
- einen Unterstützungskörper (2) mit verlängerten Gestalt und mit einer inneren Aushöhlung (4), die einen Strömungsrohr (5) für eine Kühlflüssigkeit bestimmt;
- eine Vielzahl von Streifen (3), mindestens teilweise aus supraleitendem Werkstoff, die mit dem genannten Unterstützungskörper (2) angeschlossen sind;
- eine Vielzahl von Führungen (6), die an dem genannten Unterstützungskörper (2) befestigt sind und entsprechende Gehäuse (7) zur Aufnahme der Streifen (3) bestimmen;
**dadurch gekennzeichnet, dass** es einen Strömungskanal (11) für die Kühlflüssigkeit in jedem Gehäuse (7) hat.

2. Kabel nach Anspruch 1, **dadurch gekennzeichnet, dass** jedes Gehäuse (7) mindestens eine Nut (12) hat, die sich je nach der Ausdehnung des Gehäuses (7) erstreckt und den genannten Strömungskanal (11) bestimmt.

3. Kabel nach Anspruch 2, **dadurch gekennzeichnet, dass** jedes Gehäuse (7) zwei nebeneinanderliegende Nuten (12) hat, die sich je nach der Ausdehnung des Gehäuses (7) erstrecken und entsprechende Strömungskanäle (11) bestimmen.

4. Kabel nach Anspruch 2 oder 3, **dadurch gekennzeichnet, dass** jedes Gehäuse (7) eine Grundfläche (9), woran die Streifen (3) angrenzen, sowie zwei mit der Grundfläche (9) verbundene Seitenflächen (10) hat; wobei jede Nut (12) an der genannten Grundfläche (9) erlangt wird.

5. Kabel nach Anspruch 3 oder 4, **dadurch gekennzeichnet, dass** jede Nut (12) einen wesentlich halbkreisförmigen Querschnitt hat.

6. Kabel nach irgendeinem der vorangegangenen Ansprüche 3 bis 5, **dadurch gekennzeichnet, dass** jede Nut (12) abgerundete Seitenränder (12a) in der Nähe der Grundfläche (9) hat.

7. Kabel nach irgendeinem der vorangegangenen Ansprüche 4 bis 6, **dadurch gekennzeichnet, dass** die genannten Streifen (3) eine kleinere Breite als die Breite der Gehäuse (7) haben, so dass sie einen Luftzwischenraum (13) zwischen den genannten Streifen und den genannten Seitenflächen (10) der Gehäuse (7) bestimmen.

8. Kabel nach irgendeinem der vorangegangenen Ansprüche, **dadurch gekennzeichnet, dass** es eine Vielzahl von Abstandhaltern (16) umfasst, wobei jede von denen in einem entsprechenden Gehäuse (7) über den genannten Streifen (3) gesteckt wird, um die genannten Streifen (3) in den genannten Gehäusen (7) zusammenzupressen.

9. Kabel nach Anspruch 8, **dadurch gekennzeichnet, dass** es eine Beschichtung (14) um die genannten Führungen (6) umfasst, wobei die Beschichtung die genannten Gehäuse (7) schließt; wobei die genannten Abstandhalter (16) zwischen den genannten Streifen (3) und der genannten Beschichtung (14) gesteckt werden.

10. Kabel nach Anspruch 8 oder 9, **dadurch gekennzeichnet, dass** jeder Abstandhalter (16) einen streifenförmigen Körper (17) mit einer Breite, die wesentlich dieselbe ist als die Breite der Gehäuse (7), umfasst.

11. Kabel nach Anspruch 8 oder 9, **dadurch gekennzeichnet, dass** jeder Abstandhalter (16) eine Vielzahl von nebeneinanderliegenden Leitungen (18) in jedem Gehäuse (7) umfasst, die an die Streifen (3) angrenzen.

12. Verfahren zur Herstellung von einem elektrischen Kabel nach irgendeinem der vorangegangenen Ansprüche, die die folgenden Schritte umfasst:
- Anordnung eines Unterstützungskörpers (2) mit verlängerten Gestalt und mit einer inneren Aushöhlung (4), die ein Strömungsrohr (5) für eine Kühlflüssigkeit bestimmt;
- Anordnung einer Vielzahl von Führungen (6), die an dem genannten Unterstützungskörper (2) befestigt sind und entsprechende Gehäuse (7) bestimmen;
- Anordnung einer Vielzahl von Streifen (3), mindestens teilweise aus supraleitendem Werkstoff, in den genannten Gehäusen (7);
**dadurch gekennzeichnet, dass** es den weiteren Schritt der Anordnung mindestens eines Strömungskanals (11) für die Kühlflüssigkeit in jedem Gehäuse (7).

13. Verfahren nach Anspruch 12, **dadurch gekennzeichnet, dass** der Schritt der Anordnung mindestens eines Strömungskanals (11) den Schritt der Erlangung mindestens einer Nut (12) in jedem Gehäuse (7) umfasst.

## Revendications

1. Câble électrique comprenant:
- un corps de support (2) de forme allongée, ayant une cavité (4) à son intérieur définissant un tuyau d'écoulement (5) pour un liquide de refroidissement;
- une pluralité de bandes (3) au moins partiellement constituées de matériau semiconducteur, associées audit corps de support (2);
- une pluralité de guides (6) fixés audit corps de support (2) définissant des logements (7) correspondants pour loger les bandes (3);
**caractérisé en ce qu'**il a un passage d'écoulement (11) pour le fluide de refroidissement dans chaque logement (7).

2. Câble selon la revendication 1, **caractérisé en ce que** chaque logement (7) a au moins une rainure (12) qui s'étend suivant l'extension du logement (7) et qui définit ledit passage d'écoulement (11).

3. Câble selon la revendication 2, **caractérisé en ce que** chaque logement (7) a deux rainures (12) agencées côte à côte, qui s'étendent suivant l'extension du logement (7) et qui définissent des passages d'écoulement (11) correspondants.

4. Câble selon la revendication 2 ou 3, **caractérisé en ce que** chaque logement (7) a une face de base (9), sur laquelle les bandes (3) s'appuient en butée, et deux faces latérales (10) connectées à la face de base (9), chaque rainure (12) étant obtenue sur ladite face de base (9).

5. Câble selon la revendication 3 ou 4, **caractérisé en ce que** chaque rainure (12) a une section transversale de forme substantiellement semi-circulaire.

6. Câble selon l'une quelconque des revendications précédentes 3 à 5, **caractérisé en ce que** chaque rainure (12) a des bords latéraux (12a) arrondis à proximité de la face de base (9).

7. Câble selon l'une quelconque des revendications précédentes 4 à 6, **caractérisé en ce que** lesdites bandes (3) ont une largeur plus petite que la largeur des logements (7) de façon à définir un espace d'air (13) entre lesdites bandes et lesdites faces latérales (10) des logements (7).

8. Câble selon l'une quelconque des revendications précédentes, **caractérisé en ce qu'**il comprend une pluralité d'entretoises (16), chacune introduite dans un logement (7) correspondant au-dessus desdites bandes (3), pour compacter lesdites bandes (3) dans lesdits logements (7).

9. Câble selon la revendication 8, **caractérisé en ce qu'**il comprend un revêtement (14) agencé autour desdits guides (6), qui ferme lesdits logements (7); lesdites entretoises (16) étant agencées entre lesdites bandes (3) et ledit revêtement (14).

10. Câble selon la revendication 8 ou 9, **caractérisé en ce que** chaque entretoise (16) comprend un corps similaire à une bande (17) ayant une largeur substantiellement égale à la largeur des logements (7).

11. Câble selon la revendication 8 ou 9, **caractérisé en ce que** chaque entretoise (16) comprend une pluralité de fils (18) agencés côte à côte dans chaque logement (7) en butée contre les bandes (3).

12. Procédé d'obtention d'un câble électrique selon l'une quelconque des revendications précédentes, comprenant les passages de:
- agencer un corps de support (2) de forme allongée, ayant une cavité (4) à son intérieur définissant un tuyau d'écoulement (5);
- agencer une pluralité de guides (6) fixés audit corps de support (2) définissant des logements (7) correspondants;
- agencer une pluralité de bandes (3) au moins partiellement constituées de matériau semiconducteur, dans lesdits logements (7);
**caractérisé en ce qu'**il comprend aussi le passage d'agencer au moins un passage d'écoulement (11) pour le fluide de refroidissement dans chaque logement (7).

13. Procédé selon la revendication 12, **caractérisé en ce que** le passage d'agencer au moins un passage d'écoulement (11) comprend le passage d'obtenir au moins une rainure (12) dans chaque logement (7).
